# EUROPÄISCHE PATENTSCHRIFT

(11) **EP 3 507 046 B1**
(45) Veröffentlichungstag und Bekanntmachung des Hinweises auf die Patenterteilung: **11.11.2020**
(21) Anmeldenummer: 17761444.3
(22) Anmeldetag: 31.08.2017
(51) Int. Cl.: B23K 1/00, B23K 1/008, B23K 1/20, F28F 3/02, F28D 9/00, B23K 101/14

(54) **VERFAHREN ZUR HERSTELLUNG EINES PLATTENWÄRMEÜBERTRAGERBLOCKS MIT GEZIELTER APPLIKATION DES LOTMATERIALS AUF, INSBESONDERE FINS UND SIDEBARS**
METHOD OF PRODUCING A PLATE HEAT TRANSFER BLOCK WITH TARGETED APPLICATION OF THE SOLDERING MATERIAL, IN PARTICULAR ON FINS AND SIDE BARS
PROCEDE DE FABRICATION D'UN BLOC D'ECHANGEUR DE CHALEUR A PLAQUES CONSISTANT EN L'APPLICATION CIBLEE DE MATERIAU A BRASER, EN PARTICULIER SUR DES AILETTES ET BARRES LATERALES

(30) Priorität: 01.09.2016 EP 16001912
(43) Veröffentlichungstag der Anmeldung: 10.07.2019
(73) Patentinhaber: Linde GmbH, 82049 Pullach (DE)
(72) Erfinder: AIGNER, Herbert, 84549 Engelsberg (DE); MATHE, Günther, 84547 Emmerting (DE)
(74) Vertreter: Meilinger, Claudia Sabine
(86) Internationale Anmeldenummer: PCT/EP2017/025247
(87) Internationale Veröffentlichungsnummer: WO 2018/041416

(56) Entgegenhaltungen:
- WO-A1-2015/067356
- WO-A1-2016/116273
- JP-A- 2000 061 623
- JP-B2- 3 625 562
- US-A- 4 053 969
- US-A1- 2004 108 365

## Beschreibung

Die Erfindung betrifft ein Verfahren zur Herstellung eines Plattenwärmeübertragerblocks gemäß dem Oberbegriff des Anspruchs 1 (siehe z.B. WO2015/067356A1).

Aus dem Stand der Technik sind Plattenwärmeübertrager bekannt, welche dazu eingerichtet sind, die Wärme eines ersten Fluids indirekt auf ein anderes, zweites Fluid zu übertragen. Dabei werden die Fluide im Plattenwärmeübertrager in separaten Wärmeaustauschpassagen des Plattenwärmeübertragerblocks geführt. Diese werden durch je zwei parallele Trennplatten des Plattenwärmeübertragerblocks begrenzt, zwischen denen jeweils eine Wärmeleitstruktur angeordnet ist, die auch als Fin bezeichnet wird.

Derartige Plattenwärmeübertragerblöcke sind z.B. in "The standards of the brazed aluminium plate-fin heat exchanger manufacturers association" ALPEMA, Third Edition, 2010 gezeigt und beschrieben. Ein solcher Plattenwärmeübertragerblock weist mehrere parallel zueinander angeordnete Trennplatten in Form von Trennblechen auf, die eine Vielzahl von Wärmeaustauschpassagen für die miteinander in indirekte Wärmeübertragung zu bringenden Fluide bilden. Der Wärmeaustausch zwischen den am Wärmeaustausch teilnehmenden Fluiden findet dabei zwischen benachbarten Wärmeaustauschpassagen statt, wobei die Wärmeaustauschpassagen und somit die Fluide durch die Trennplatten voneinander getrennt sind. Der Wärmeaustausch erfolgt mittels Wärmeübertragung über die Trennplatten sowie die zwischen den Trennplatten angeordneten Wärmeleitstrukturen (Fins). Die Wärmeaustauschpassagen sind durch bündig am Rand der Trennbleche angebrachte Randleisten (z.B. in Form von Blechstreifen), die auch als Sidebars bezeichnet werden, nach außen hin abgeschlossen. Der Plattenwärmeübertragerblock ist des Weiteren durch zwei äußerste Trennplatten, die Deckplatten bilden (z.B. in Form von Deckblechen) nach außen begrenzt. Die beiden Deckplatten werden also jeweils durch eine äußerste Trennplatte des Plattenwärmeübertragerblocks gebildet.

Zur Zu- und Abführung der wärmeaustauschenden Fluide sind über Eintritts- und Austrittsöffnungen der Wärmeaustauschpassagen Sammler mit Stutzen an den Wärmeübertragerblock angebracht, die zum Anschluss von zu- und abführenden Rohrleitungen dienen.

Derartige Plattenwärmeübertrager sind vorzugsweise aus Aluminium gebildet, wobei die Bauteile durch Hartlöten miteinander verbunden werden.

Die Herstellung eines derartigen gelöteten Plattenwärmeübertragers ist beispielsweise in dem Artikel "The Manufacture of Plate-Fin Heat Exchangers at Linde" von Dr. Wolfgang Diery, in den Linde Reports on Science and Technology, aus dem Jahr 1984, Nr. 37 beschrieben.

Demnach werden zunächst die Komponenten wie Trennplatten, Fins und Seitenleisten in den entsprechenden Abmessungen bereitgestellt. Nach einem anschließenden Waschprozess werden diese Komponenten in einem Stapel angeordnet, wobei die Trennplatten unter Zwischenlage von Fins und jeweils zumindest zwei Sidebars parallel zueinander angeordnet werden.

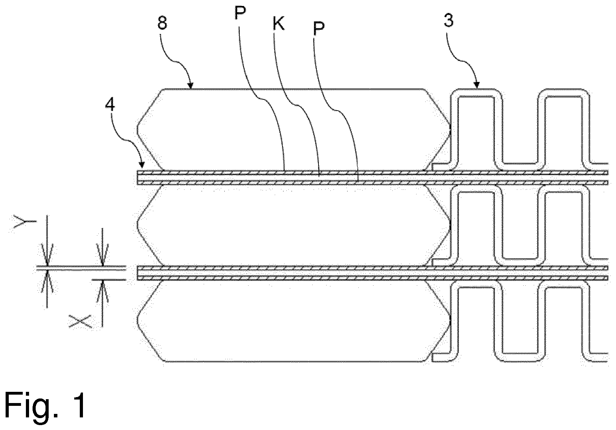

Die Trennplatten (mit Ausnahme der Deckplatten) sind beidseitig, wie aus Fig. 1 der vorliegenden Patentanmeldung zu ersehen, jeweils mit einer Lotschicht P versehen, die auf ein Kernmaterial K aufgebracht wurde. Figur 1 zeigt auch die unter Zwischenlage der Fins 3 und Sidebars 8 übereinander gestapelten Trennbleche 4 mit Lotplattierung P nach dem genannten Stand der Technik.

Gemäß Figur 1 werden derartige Trennbleche in der Regel hergestellt, indem zunächst ein Stapel aus drei Barren umfassend das Plattiermaterial P, das Kernmaterial K und ein weiteres Plattiermaterial P zusammengestellt wird.

Die drei Barren P, K, P werden anschließend durch Schweißverbindungen an den Rändern punktuell aneinander geheftet und in einem nachfolgenden Plattierwalzprozess flächig miteinander verbunden und auf die geforderte Dicke gewalzt. In der Regel beträgt das Verhältnis Y/X der Lotplattierungsdicke Y zur Gesamtdicke X zwischen 10% und 18%.

Nachteilig an diesem Verfahren ist, dass die Dicke Y des Plattiermaterials P entgegen der vereinfachten Darstellung in Fig. 1 über die Fläche des Kernmaterials K in der Regel variiert und zwar derart, dass vereinzelt sehr dünne Plattierungsbereiche vorhanden sein können, die bei dem anschließenden Waschprozess weiter abgetragen werden.

In der US 4,053,969 (Fig. 1, 2) wird vorgeschlagen, ein Gemisch aus Lotpulver und Bindemittel auf die gewellten Bleche und die Seitenleisten aufzusprühen und anschließend von den Oberflächen, wie beispielsweise den Oberflächen 1a, zu entfernen, sodass sich das Lot nur auf den Oberflächen der Vertiefungen, d.h. den seitlichen Oberflächen 1b und den Böden 1c der Rillen der gewellten Bleche, und auf den seitlichen Oberflächen 3b der Seitenleisten befindet.

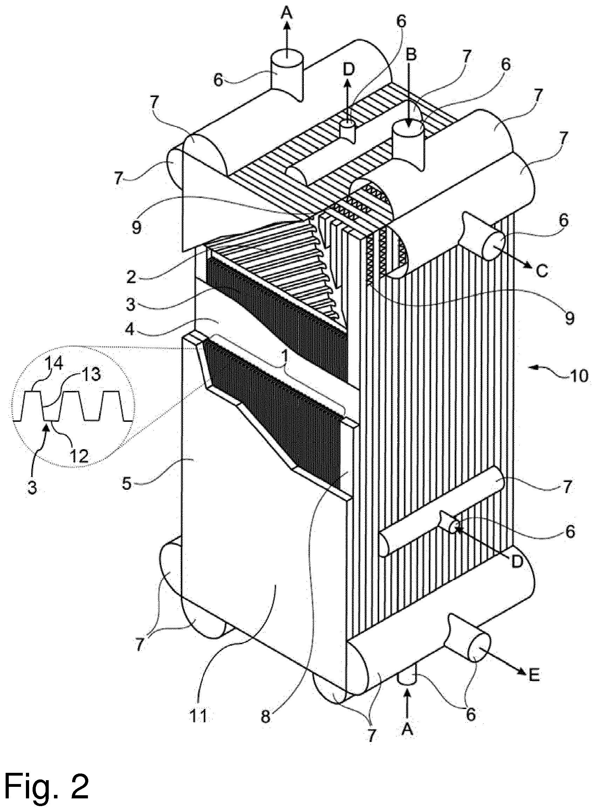

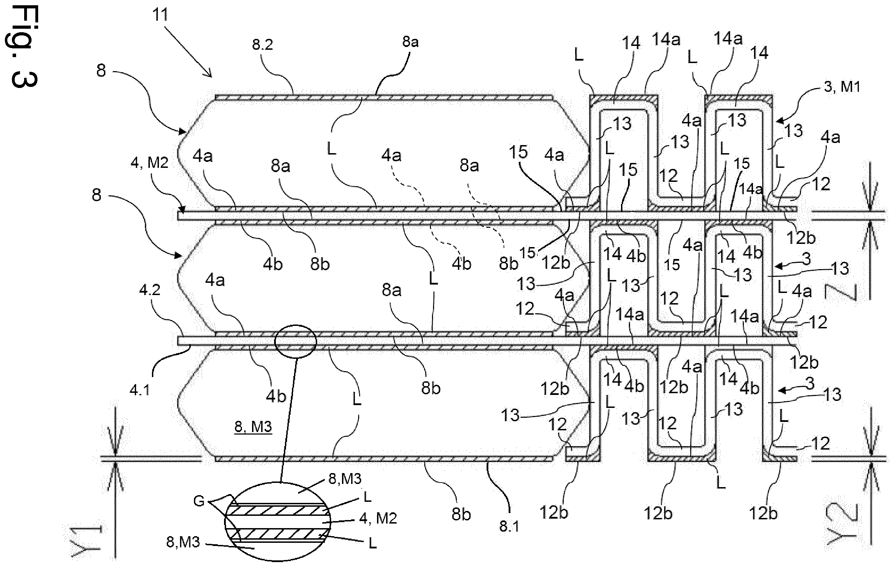

Die WO 2015/067356A1 bezieht sich auf ein Verfahren zum indirekten Wärmetausch zwischen einer Salzschmelze und einem Wärmeträger in einem Plattenwärmetauscher. Dieser wird hergestellt, indem die einzelnen Passagen 3 mit Fins 30 (Fig. 3), Trennblechen 4 und Sidebars 8 (Fig. 2) aufeinander gestapelt, mit Lot versehen und in einem Ofen hartgelötet werden.

Hiervon ausgehend liegt der vorliegenden Erfindung die Aufgabe zugrunde, ein verbessertes Verfahren zur Herstellung eines Plattenwärmeübertragerblocks bereitzustellen, so dass die gebildeten Strömungskanäle nicht durch überschüssiges Lot im Querschnitt verengt werden.

Diese Aufgabe wird durch ein Verfahren mit den Merkmalen des Anspruchs 1 gelöst. Vorteilhafte Ausgestaltungen des erfindungsgemäßen Verfahrens sind in den entsprechenden Unteransprüchen angegeben und werden nachfolgend beschrieben.

Demnach wird ein Verfahren zur Herstellung eines gelöteten Plattenwärmeübertragerblocks bereitgestellt, der eine Mehrzahl an Wärmeaustauschpassagen zum indirekten Wärmeaustausch zwischen zumindest zwei Fluiden aufweist, wobei der Plattenwärmeübertragerblock aus Trennplatten, Randleisten und Wärmeleitstrukturen als Komponenten aufgebaut wird, wobei die Wärmeleitstrukturen eine wellenförmige Struktur mit abwechselnd angeordneten Wellendächern und Wellenstegen aufweisen oder bilden, und wobei die Wellendächer parallel zueinander angeordnet sind, wobei das erfindungsgemäße Verfahren folgende Schritte aufweist:
- Anordnen der Komponenten in einem Stapel durch paralleles Anordnen der Trennplatten unter Einlegen von Randleisten und Wärmeleitstrukturen zwischen die Trennplatten, wobei eine jeweilige Wärmeaustauschpassage durch jeweils zumindest zwei Randleisten begrenzt wird, und wobei die Randleisten jeweils mit einer ersten Anlagefläche an einem Anlagebereich einer benachbarten Trennplatte sowie mit einer der ersten Anlagefläche abgewandten weiteren, zweiten Anlagefläche an einem weiteren Anlagebereich einer weiteren, benachbarten Trennplatte anliegen, und wobei die Wellendächer der jeweiligen Wärmeleitstruktur/en jeweils mit einer Anlagefläche an einem zugeordneten Anlagebereich der benachbarten Trennplatten anliegen, und
- Löten des Stapels.

Erfindungsgemäß wird vor dem Anordnen der Komponenten in dem Stapel Lotmaterial derart auf eine oder mehrere der Komponenten des Plattenwärmeübertragerblocks aufgebracht,
- dass die jeweilige Anlagefläche und/oder der jeweilige Anlagebereich aus Lot gebildet ist und
- dass in einer Betrachtung nach dem Anordnen der Komponenten in dem Stapel und vor dem Löten des Stapels, Oberflächenbereiche, die sich auf einer Seite einer jeweiligen Trennplatte zwischen den Anlagebereichen und/oder den Anlageflächen befinden, frei von einer Lotschicht sind oder nicht mit einer Lotschicht in Kontakt sind.

Das gezielte Aufbringen des Lotes an den Verbindungsstellen ist vorteilhaft, da speziell bei niedrigen Finhöhen mit enger Teilung die gebildeten Strömungskanäle nicht durch überschüssiges Lot im Querschnitt verengt werden, was ansonsten zu nicht vorhersehbaren Einflüssen auf Druckverluste und Wärmeübergänge führen könnte.

Vorzugsweise wird das Lot auf eine oder mehrere der Komponenten vor dem Anordnen der Komponenten in dem Stapel derart aufgebracht, dass in einer Betrachtung nach dem Anordnen der Komponenten in dem Stapel und vor dem Löten des Stapels, alle Oberflächenbereiche, die sich auf einer Seite einer jeweiligen Trennplatte zwischen den Anlagebereichen und/oder den Anlageflächen befinden, frei von einer Lotschicht sind oder nicht mit einer Lotschicht in Kontakt stehen. Insbesondere sind also gemäß einer Ausführungsform der Erfindung die einzelnen Anlageflächen voneinander getrennt und weisen vor dem Herstellen der Lötverbindung keine aus dem Lotmaterial bestehende Verbindung untereinander auf. Gleiches gilt insbesondere auch für die Anlagebereiche, sofern diese jeweils durch eine Lotmaterialschicht gebildet sind. D.h., insbesondere die Anlagebereiche auf der gleichen Seite einer Trennplatte sind zumindest vor dem Verlöten der Komponenten durch Bereiche voneinander getrennt, die kein Lotmaterial aufweisen.

Gemäß einer bevorzugten Ausführungsform wird vor dem Anordnen der Komponenten in dem Stapel das Lotmaterial auf die Randleisten und die Wärmeleitstrukturen aufgebracht wird, und die Trennplatten bleiben frei von einer Lotschicht. Demnach kann erfindungsgemäß zum Beispiel Lotmaterial lediglich definiert auf die Sidebars und/oder Fins aufgetragen werden, so dass diese abgegrenzte, voneinander getrennte Anlageflächen erhalten, die jeweils durch eine abgegrenzte Lotmaterialschicht gebildet sind, wobei in diesem Fall die Trennplatten kein Lotmaterial erhalten.

Es besteht weiterhin auch die Möglichkeit das jeweilige Lotmaterial vor dem Anordnen der Komponenten in dem Stapel auf die Trennplatten aufzubringen und die Randleisten und die Wärmeleitstrukturen frei von einer Lotschicht zu belassen, d.h. nicht mit einer Lotschicht zu versehen. Dies bedeutet, dass nicht auf die Sidebars bzw. Fins die Lotschicht aufgebracht wird, sondern auf die Trennplatten, sodass diese Trennplatten jeweils eine Mehrzahl an voneinander getrennten Anlagebereichen aufweisen, die jeweils durch eine abgegrenzte Lotmaterialschicht gebildet sind.

Diese beiden prinzipiellen Vorgehensweisen können erfindungsgemäß natürlich auch beliebig miteinander kombiniert werden, so dass grundsätzlich die jeweilige Anlagefläche (Sidebar oder Fin) und/oder der zugeordnete Anlagebereich (Trennplatte), der die Anlagefläche nach dem bestimmungsgemäßen Anordnen der Trennplatten (sowie der weiteren Komponenten des Plattenwärmeübertragerblocks) kontaktiert, durch je eine Lotmaterialschicht gebildet sein kann. Beispielsweise besteht die Möglichkeit, vor dem Anordnen der Komponenten in dem Stapel das Lotmaterial auf die Trennplatten, die Randleisten und die Wärmeleitstrukturen aufzubringen. Weiterhin ermöglicht die vorliegende Erfindung mit Vorteil nicht nur eine gezielte Aufbringung von Lot an den erforderlichen Stellen, sondern auch das Vorsehen unterschiedlicher Lotmengen in Abhängigkeit von der jeweiligen Anforderung.

So wird zum Beispiel bei dem Verfahren des Standes der Technik im Bereich der Sidebars bei speziellen Anwendungen eine Leckage in Kauf genommen, um im Bereich der Fins eine sichere Verbindung zu gewährleisten. Mit auf dem Sidebar aufgebrachtem Lotmaterial kann die Schichtdicke gezielt beeinflusst werden und somit das Risiko für Leckagen reduziert werden.

Gemäß einer bevorzugten Ausführungsform des erfindungsgemäßen Verfahrens ist vorgesehen, dass vor dem Anordnen der Komponenten im dem Stapel Lotmaterial derart auf die Komponenten des Plattenwärmeübertragerblocks aufgebracht wird, dass das Lotmaterial zumindest einer Anlagefläche (d.h. die entsprechende Lotmaterialschicht) und/oder das Lotmaterial zumindest eines Anlagebereiches (d.h. die entsprechende Lotmaterialschicht) eine Dicke aufweist, die sich von der Dicke des Lotmaterials einer anderen Anlagefläche und/oder eines anderen Anlagebereiches unterscheidet. Die Richtung der jeweiligen Dicke verläuft hierbei normal zu den nebeneinander bzw. übereinander angeordneten Trennplatten. Beispielsweise kann die Lotmaterialschicht zwischen einem Sidebar und einer Trennplatte dicker ausgeführt werden als diejenige zwischen einem Fin und einer Trennplatte.

Weiterhin erlaubt die vorliegende Erfindung auch eine Modifikation der Zusammensetzung des Lotmaterials bzw. eine Modifikation der Zusammensetzung in Abhängigkeit der zu verbindenden Komponenten, was den Entwicklungsprozess deutlich vereinfacht und beschleunigt.

Daher ist gemäß einer bevorzugten Ausführungsform des erfindungsgemäßen Verfahrens vorgesehen, dass vor dem Anordnen der Komponenten in dem Stapel, Lotmaterial derart auf Komponenten des Plattenwärmeübertragerblocks aufgebracht wird, dass das Lotmaterial zumindest einer Anlagefläche und/oder zumindest eines Anlagebereiches eine Zusammensetzung aufweist, die sich von der Zusammensetzung des Lotmaterials einer anderen Anlagefläche und/oder eines anderen Anlagebereiches unterscheidet.

Vorzugsweise handelt es sich bei der auf die mindestens eine Komponente aufgebrachten Lotmaterialschicht nach deren Aufbringen um eine Metallschicht im festen Aggregatszustand, die vorzugweise keine nichtmetallischen Bestandteile enthält, insbesondere keine Flussmittel, Pasten oder Klebstoffe oder dergleichen.

Gemäß einer bevorzugten Ausführungsform der vorliegenden Erfindung wird das Lotmaterial vor dem Anordnen der Komponenten in dem Stapel derart auf eine oder mehrere der Komponenten des Plattenwärmeübertragerblocks aufgebracht, dass in zumindest einer Grenzschicht zwischen der jeweiligen Komponente und dem Lotmaterial eine Legierung zwischen dem Lotmaterial und dem Material der jeweiligen Komponente gebildet wird. Hierdurch wird eine metallurgische bzw. stoffschlüssige, in anderen Worten auch intermetallische, Verbindung zwischen dem jeweiligen Material der Komponente und dem Lot geschaffen. Die Lotschicht ist damit unempfindlich gegenüber Beschädigungen oder Ablösungen. Um in einer Grenzschicht zwischen der jeweiligen Komponente und dem Lot eine Legierung zwischen dem Lotmaterial und dem Material der jeweiligen Komponente ausbilden zu können, müssen das Lotmaterial und das Material der jeweiligen Komponenten in dieser Grenzschicht durch beispielsweise Einbringen von Druck und/oder Temperatur zum Schmelzen und damit zum Verschmelzen gebracht werden.

Gemäß einer bevorzugten Ausführungsform des erfindungsgemäßen Verfahrens ist vorgesehen, dass das Lotmaterial zur Ausbildung der Anlageflächen und/oder Anlagebereiche auf die betreffenden Komponenten (z.B. Sidebars, Fins, Trennplatten) mit einem 3D-Druck-Verfahren aufgedruckt wird, und zwar insbesondere bevor die Komponenten des Plattenwärmeübertragerblocks nebeneinander bzw. übereinander angeordnet/gestapelt werden. Hierdurch besteht die Möglichkeit eine Lotschicht definierter und über ihre gesamte Fläche gleichbleibender Dicke zu erzeugen. Zudem kann die Lotschichtdicke relativ klein dimensioniert werden gegenüber dem eingangs genannten Verfahren des Walzplattierens des Lotes. Es können dabei Verhältnisse Y/X der Lotplattierungsdicke Y zur Gesamtdicke X beispielsweise bei einer Trennplatte von weniger als 10%, beispielsweise 5% bis 7% erreicht werden.

Vorzugsweise werden die Anlageflächen und/oder die Anlagebereiche, die aus Lot (L) auf den Komponenten ausgebildet werden, mit über die jeweilige Anlagefläche und/oder den jeweiligen Anlagebereich gleichbleibender Dicke ausgebildet.

Weiterhin ist gemäß einer bevorzugten Ausführungsform des erfindungsgemäßen Verfahrens vorgesehen, dass die durch Lotmaterial gebildeten Anlageflächen und/oder die durch Lotmaterial gebildeten Anlagebereiche vor dem Anordnen der Komponenten in dem Stapel jeweils so ausgebildet werden, dass das entsprechende Gegenstück beim Stapeln der Komponenten jeweils über die gesamte Fläche der jeweiligen Lotschicht zum Anliegen kommt.

Geeignete 3D-Druckverfahren sind aus dem Stand der Technik bekannt. Vorzugsweise werden bei dem erfindungsgemäßen Verfahren 3D-Druckverfahren verwendet, bei denen das Lotmaterial bzw. Ausgangsmaterial zunächst in Pulverform oder Drahtform vorliegt. Als 3D-Druckverfahren kann diesbezüglich z.B. Elektronenstrahlschmelzen verwendet werden, wobei das Ausgangsmaterial (in Pulver- oder Drahtform) gezielt aufgeschmolzen und hierbei die herzustellende 3D-Struktur bzw. Lotmaterialschicht Schicht für Schicht erzeugt wird. Alternativ kann z.B. auch Lasersintern verwendet werden. Hierbei wird das Werkstück bzw. die Lotmaterialschicht Schicht für Schicht aus einem pulverförmigen Ausgangsmaterial erzeugt, wobei das Aufschmelzen der Pulverpartikel mittels Laserlicht erfolgt.

Alternativ oder ergänzend hierzu kann das Lotmaterial gemäß einer Ausführungsform durch thermischen Spritzen des Lotmaterials auf die besagten Komponenten aufgebracht werden (siehe auch oben). Beim thermischen Spritzen wird das Lotmaterial geschmolzen und in einem Gasstrom in Form von Spritzpartikeln beschleunigt und auf die Oberfläche der zu beschichtenden Komponente geschleudert, so dass diese eine oder mehrere abgegrenzte Anlageflächen (Sidebars oder Fins) bzw. einen oder mehrere abgegrenzte Anlagebereiche (Trennplatten) erhält.

Gemäß einer Ausführungsform des erfindungsgemäßen Verfahrens ist vorgesehen, dass die Trennplatten, Randleisten und Wärmeleitstrukturen beispielsweise in einem Vakuum-Lötofen oder einem Wärmeträgerbad erhitzt werden, so dass das Lotmaterial geschmolzen wird und Lötverbindungen zwischen den Randleisten und den jeweils benachbarten Trennplatten sowie zwischen den Wärmeleitstrukturen und den jeweils benachbarten Trennplatten ausgebildet werden. Die Temperatur wird beim Erhitzen vorzugsweise so eingestellt, dass ein Hartlöten der Komponenten des Plattenwärmeübertragerblocks stattfindet.

Vorzugsweise werden die Trennplatten bei dem Anordnen der Trennplatten (unter Zwischenlage der Sidebars und Fins) übereinander unter Zwischenlage der Sidebars und der Fins in einem Stapel angeordnet, so dass sie sich die Trennplatten jeweils in einer horizontalen Ebene erstrecken.

Weiterhin ist gemäß einer bevorzugten Ausführungsform des erfindungsgemäßen Verfahrens vorgesehen, dass vor dem Anordnen der Komponenten in dem Stapel, das Lotmaterial derart auf die Randleisten und Wärmeleitstrukturen aufgebracht wird, dass eine metallurgische Verbindung zwischen den Randleisten und dem Lotmaterial und zwischen den Wärmeleitstrukturen und dem Lotmaterial erzeugt wird und lediglich die Anlageflächen der Randleisten und der Wärmeleitstrukturen Lotmaterial aufweisen, wobei insbesondere die Trennplatten, insbesondere deren Anlagebereiche, vor dem besagten Bilden der Lötverbindungen kein Lotmaterial aufweisen. D.h., dass die Trennplatten bei dieser Ausführungsform also vor dem Verlöten der einzelnen Komponenten keinerlei Lotmaterial aufweisen.

Gemäß einer bevorzugten Ausführungsform des erfindungsgemäßen Verfahrens weist das Lotmaterial zumindest einen oder mehrere der folgenden Stoffe auf: Aluminium, Silizium, Magnesium.

Mit dem erfindungsgemäßen Verfahren können insbesondere Aluminium-Plattenwärmeübertrager gefertigt werden, bei denen die besagten Komponenten z.B. aus einer 3003-Aluminiumlegierung bestehen können. Weitere Materialien für die Komponenten sind in den Tabellen 6-1 und 6-2 des eingangs genannten Alpema-Standards aufgelistet. Als Lotmaterial kann beispielsweise eine 4004-Aluminiumlegierung verwendet werden.

Grundsätzlich ist das erfindungsgemäße Verfahren aber auch bei Plattenwärmeübertragern aus Edelstahl denkbar.

Nach der Herstellung des Plattenwärmeübertragerblocks können Sammler (auch als Header bezeichnet) an den Plattenwärmeübertragerblock angeschweißt werden. Über einen solchen Sammler kann ein Fluid in zugeordnete Wärmeübertragungspassagen des Plattenwärmeübertragerblocks eingeleitet bzw. aus diesen abgezogen werden. An den jeweiligen Sammler wird bevorzugt ein Stutzen angeschweißt, über den das jeweilige Fluid in den Sammler eingeleitet bzw. aus diesem abgezogen werden kann.

Der solchermaßen hergestellte Plattenwärmeübertrager weist bevorzugt pro Fluid, das in den Plattenwärmeübertrager geführt wird, zwei Sammler mit Stutzen auf, wobei das Fluid über den einen Stutzen und Sammler in die zugehörigen Wärmeaustauschpassagen einleitbar ist und über den anderen Sammler bzw. Stutzen wieder ausleitbar ist.

Vorzugsweise weist ein mit dem erfindungsgemäßen Verfahren hergestellter Plattenwärmeübertragerblock erste Wärmeaustauschpassagen für ein erstes Fluid auf, die jeweils durch zwei benachbarte Trennplatten begrenzt werden und jeweils mit zwei Sammlern zum Einleiten bzw. Abziehen des ersten Fluides in Strömungsverbindung stehen, die z.B. an den Plattenwärmeübertragerblock angeschweißt sind. Weiterhin weist der Plattenwärmeübertrager bevorzugt zweite Wärmeaustauschpassagen für ein zweites Fluid auf, die jeweils durch zwei benachbarte Trennplatten begrenzt werden und jeweils mit zwei weiteren Sammlern zum Einleiten bzw. Abziehen des zweiten Fluides in Strömungsverbindung stehen, die z.B. an den Plattenwärmeübertragerblock angeschweißt sind.

Die ersten und zweiten Wärmeaustauschpassagen sind vorzugsweise alternierend nebeneinander angeordnet, so dass die beiden Fluide durch benachbarte Wärmeaustauschpassagen strömen und indirekt Wärme miteinander austauschen können. In den Wärmeaustauschpassagen, d.h., zwischen je zwei benachbarten Trennwänden ist bevorzugt je ein Fin angeordnet, der insbesondere eine gewellte Struktur mit alternierend angeordneten Tälern und Bergen aufweist, die durch Flanken der jeweiligen Struktur miteinander verbunden sind, so dass jede Wärmeaustauschpassage eine Vielzahl von parallelen Kanälen zwischen den beiden jeweils zugeordneten Trennwänden ausbildet, durch die das jeweilige Fluid strömen kann.

Weitere Merkmale und Vorteile der vorliegenden Erfindung sollen bei den nachfolgenden Figurenbeschreibungen von Ausführungsbeispielen der Erfindung anhand der Figuren beschrieben werden. Es zeigen:
- Fig. 1: eine Schnittansicht eines Plattenwärmeübertragers bei der Herstellung nach dem Stand der Technik, wobei die Trennplatten des Plattenwärmeübertragers beidseitig eine vollflächige Lotplattierung aufweisen;
- Fig. 2: eine perspektivische Darstellung eines mit dem erfindungsgemäßen Verfahren hergestellten Plattenwärmeübertragers;
- Fig. 3: eine erste Ausführungsform in einer gestapelten Ansicht der Komponenten, bei welcher das Lotmaterial auf die Sidebars und Fins aufgebracht wurde;
- Fig. 4: die erste Ausführungsform in einer Explosionsansicht;
- Fig. 5: eine zweite Ausführungsform in einer Explosionsansicht eines Stapels der Komponenten, bei welcher Lot auf die Trennplatten aufgebracht wurde; und
- Fig. 6: eine dritte Ausführungsform in einer Explosionsansicht eines Stapels der Komponenten, bei welcher in Verbindungsbereichen zwischen Sidebars und Trennplatten Lot nur auf die Trennplatten aufgebracht wurde und in Verbindungsbereichen zwischen Fins und Trennplatten Lot nur auf die Fins aufgebracht wurde.

Fig. 2 zeigt beispielhaft einen Plattenwärmeübertrager 10, wie er mit dem erfindungsgemäßen Verfahren herstellbar ist. Der Plattenwärmeübertrager 10 weist mehrere parallel zueinander angeordnete Trennplatten (z.B. in Form von Trennblechen) 4 auf, die eine Vielzahl von Wärmeaustauschpassagen 1 für die miteinander in indirekte Wärmeübertragung zu bringenden Fluide A, B, C, D, E bilden.

Die Trennplatten 4 bestehen z.B. aus einer Aluminiumlegierung. Der Wärmeaustausch zwischen den am Wärmeaustausch teilnehmenden Fluiden A, B, C, D, E findet dabei zwischen benachbarten Wärmeaustauschpassagen 1 statt, wobei die Wärmeaustauschpassagen 1 und somit die Fluide durch die Trennplatten 4 voneinander getrennt sind. Der Wärmeaustausch erfolgt mittels Wärmeübertragung über die Trennplatten 4 sowie über die zwischen den Trennplatten 4 angeordneten Heizflächenelemente (Fins) 3, die insbesondere ebenfalls aus einer Aluminiumlegierung bestehen können.

Die Wärmeaustauschpassagen 1 sind durch bündig am Rand der Trennplatten 4 angebrachte Seitenleisten in Form von Metallstäben 8, im Weiteren auch als Sidebars 8 bezeichnet, nach außen abgeschlossen. Die besagten Sidebars 8 können ebenfalls aus einer Aluminiumlegierung bestehen. Innerhalb der Wärmeaustauschpassagen 1 bzw. zwischen je zwei Trennplatten 4 sind die gewellten Fins 3 angeordnet, wobei ein Querschnitt eines Fins 3 in dem Detail der Figur 2 gezeigt ist.

Danach weisen die Fins 3 jeweils eine wellenförmige Struktur mit alternierenden Wellendächern 12, 14 und Wellenstegen 13 auf, wobei je ein unteres Wellendach 12 mit einem benachbarten oberen Wellendach 14 über einen Wellensteg 13 des betreffenden Fins 3 verbunden ist, so dass sich die besagte wellenförmige Struktur ergibt.

Die wellenförmige Struktur kann ausgeprägte gebogenen Abschnitte (Biegekanten) an den Wellendächern 12, 14 aufweisen, wie in Fig. 3 dargestellt, oder auch eine trapezförmige Gestalt aufweisen, wie in Fig. 2 dargestellt. Ebenso ist denkbar, dass die wellenförmige Wellendächer 12, 14 rechtwinklig zu den Wellenstegen 13 verlaufen.

Durch die wellenförmige Struktur werden - zusammen mit den beidseitigen Trennplatten 4 - Kanäle zur Führung eines jeweiligen Fluides A, B, C, D, E in der jeweiligen Wärmeaustauschpassage 1 gebildet. Die Wellendächer 12, 14 der wellenförmigen Struktur des jeweiligen Fins 3 sind mit den jeweils benachbarten Trennplatten 4 über Lötverbindungen verbunden, wie weiter unten dargelegt wird. Die am Wärmeaustausch teilnehmenden Fluide A, B, C, D, E sind somit im direkten Wärmekontakt mit den wellenförmigen Strukturen 3, so dass der Wärmeübergang durch den thermischen Kontakt zwischen den Wellendächern 12, 14 und den Trennplatten 4 gewährleistet ist. Zur Optimierung der Wärmeübertragung wird die Ausrichtung der wellenförmigen Struktur in Abhängigkeit vom Anwendungsfall so gewählt, dass eine Gleich-, Kreuz-, Gegen- oder Kreuz-Gegenströmung zwischen benachbarten Passagen ermöglicht wird.

Der Plattenwärmeübertrager 10 weist ferner Öffnungen 9 zu den Wärmeaustauschpassagen 1 auf, z.B. an den Enden des Plattenwärmeübertragers 10 oder an einem mittleren Abschnitt, über die Fluide A, B, C, D, E in die Wärmeaustauschpassagen 1 eingeleitet bzw. aus diesen abgezogen werden können. Im Bereich dieser Öffnungen 9 können die einzelnen Wärmeaustauschpassagen 1 Verteilerfins 2 aufweisen, die das jeweilige Fluid auf die Kanäle eines Fins 3 der betreffenden Wärmeaustauschpassage 1 verteilen. Ein Fluid A, B, C, D, E kann also über eine Öffnung 9 des Plattenwärmeübertragerblocks 11 in die zugeordnete Wärmeaustauschpassage 1 eingeleitet werden und durch eine weitere Öffnung 9 aus der betreffenden Wärmeaustauschpassage 1 wieder abgezogen werden.

Die Trennplatten 4, Fins 3 und Sidebars 8 sowie ggf. weitere Komponenten (z.B. Verteilerfins 2) werden durch Löten, vorzugsweise Hartlöten, miteinander verbunden, was im Folgenden beschrieben wird.

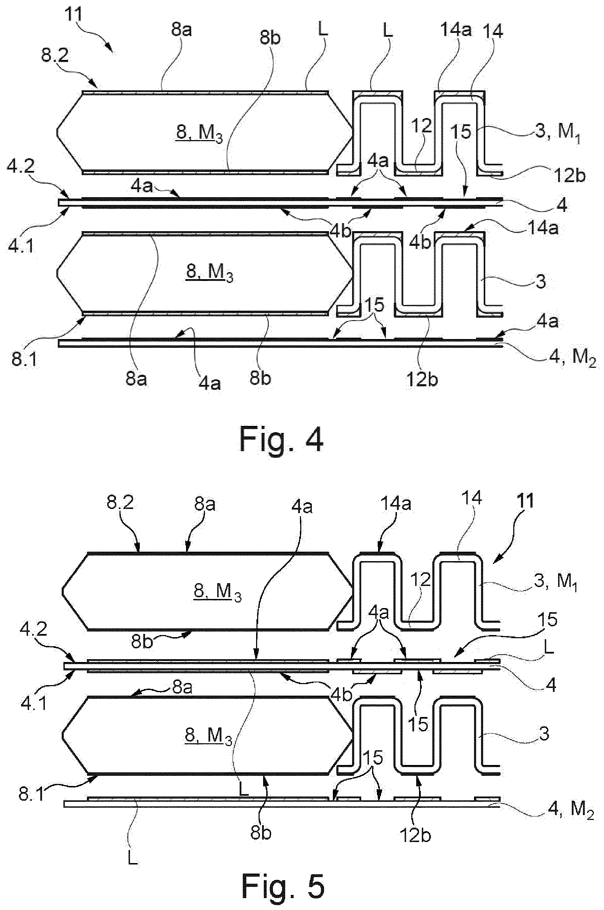

Fig. 3 zeigt in einer Schnittansicht einen Stapel aus Trennplatten 4, Fins 3 und Sidebars 8 vor dem Löten des Stapels 11 gemäß einer ersten Ausführungsform der vorliegenden Erfindung. Fig. 4 zeigt ebenfalls diese erste Ausführungsform in einer Explosionsansicht eines Stapels von Komponenten. Bei dieser ersten Ausführungsform werden vor dem Anordnen der Komponenten 3, 4 und 8 des Plattenwärmeübertragerblocks 11 in dem Stapel 11, Lotschichten L in definierter Weise auf die Fins 3 und die Sidebars 8 aufgebracht, wohingegen auf die Trennplatten 4 keine Lotschicht aufgebracht wird. Dies bedeutet, dass die Trennplatten 4 vor dem Bilden des Stapels und damit vor dem Löten keine Lotschichten L aufweisen.

Das Aufbringen der Lotschichten L erfolgt dabei in folgender Weise: Auf die Sidebars 8 werden beidseitig, d.h. jeweils auf deren Unterseite 8.1 und deren Oberseite 8.2 Lotschichten L aufgebracht, die somit eine obere Anlagefläche 8a aus Lot L und eine untere Anlagefläche 8b aus Lot L für die anzulegenden Trennplatten 4 bilden.

Auf die Fins 3 werden auf den jeweiligen unteren Wellendächern 12 und den jeweiligen oberen Wellendächern 14 ebenfalls Lotschichten L aufgebracht, die dann jeweilige untere Anlageflächen 12b und obere Anlageflächen 14a aus Lot L für die anzulegenden Trennbleche 4 bilden.

Die einzelnen Anlageflächen 8a, 8b bzw. 14a, 12b werden dabei durch je eine abgegrenzte Lotmaterialschicht L gebildet. Ein Detail der auf die Sidebars 8 aufgebrachten Lotmaterialschichten L ist im unteren Bereich der Fig. 3 dargestellt. Die Lotmaterialschicht L wird z.B. durch 3D-Drucken oder thermisches Spritzen des Lotmaterials L hergestellt, so dass das Lotmaterial L und das Material M3 der Sidebars 8 in einer Grenzschicht G eine Legierung miteinander bilden. Gleiches gilt für das Lot L und das Material M1 der Fins 3, was jedoch nicht näher dargestellt ist. Die Legierungsbildung in der Grenzschicht G setzt voraus, dass sowohl das Lotmaterial L als auch das Material M3 der Sidebars und das Material M1 der Fins 3 in der Grenzschicht G durch Einwirkung von Temperatur und/oder Druck zum Schmelzen und damit zum Verschmelzen gebracht werden.

Gemäß Figur 3 weisen die Lotmaterialschichten L der Sidebars 8 eine Dicke Y1 normal zu den Trennplatten 4 auf, während die Fins 3 eine Lotmaterialschicht L mit einer Dicke Y2 normal zu den Trennplatten 4 aufweisen. Z bezeichnet in der Figur 3 die Dicke der Trennplatten 4. Hierbei kann die Dicke Y1 der Lotmaterialschichten L der Sidebars 8 von der Dicke Y2 der Lotmaterialschichten L der oberen Wellendächer 14 und der unteren Wellendächer 12 der Fins 3 abweichen.

Die Lotschichtdicken Y1 und Y2 können in Abhängigkeit von der jeweiligen Anwendung gewählt werden. Weiterhin kann das Lotmaterial L unterschiedlicher Lotmaterialschichten L eine unterschiedliche Zusammensetzung aufweisen.

Anschließend an das Aufbringen der Lotschichten L können die lotbeschichteten Fins 3 und Sidebars 8 und die Trennplatten 4, die keine Lotschicht aufweisen, insbesondere weder auf Ihrer Unterseite 4.1 noch auf ihrer Oberseite 4.2, einem Waschverfahren unterzogen werden.

Nachfolgend werden die Komponenten 3, 4 und 8 in dem in Fig. 3 gezeigten Stapel 11 angeordnet. Die Sidebars 8 sowie die Fins 3 (insbesondere auch Verteilerfins, die in der Figur 3 nicht gezeigt sind), werden derart angeordnet, dass die Sidebars 8 jeweils mit einer oberen Anlagefläche 8a aus Lot L an einem nach unten gewandten Anlagebereich 4b auf der Unterseite 4.1 einer nach oben hin benachbarten Trennplatte 4 anliegen, und mit einer nach unten gewandten Anlagefläche 8b aus Lot L, die der oberen Anlagefläche 8a abgewandt ist, an einem nach oben gewandten Anlagebereich 4a auf der Oberseite 4.2 einer nach unten hin benachbarten Trennplatte 4 anliegen.

Weiterhin liegen bei der Anordnung gemäß Figur 3 die oberen Wellendächer 14 des jeweiligen Fin 3 jeweils mit einer oberen Anlagefläche 14a aus Lot L an einem zugeordneten nach unten gewandten Anlagebereich 4b auf der Unterseite 4.1 der nach oben hin benachbarten Trennplatte 4 an, wohingegen die unteren Wellendächer 12 des jeweiligen Fin 3 jeweils mit einer unteren Anlagefläche 12b aus Lot L an einem zugeordneten sowie nach oben weisenden Anlagebereich 4a auf der Oberseite 4.2 der nach unten hin benachbarten Trennplatte 4 anliegen.

Die Anlagebereiche 4a, 4b der Trennplatten 4 weisen in diesem ersten Ausführungsbeispiel gemäß der Fig. 3 und 4 kein Lotmaterial L auf, sondern werden durch die jeweilige Oberfläche der jeweiligen Trennplatte 4 gebildet.

Die Lotmaterialschichten L, die vorzugsweise ebene Anlageflächen 8a, 8b bzw. 14a, 12b mit jeweils gleichbleibender Dicke ausbilden, die zur flächigen Anlage an die zugeordneten Anlagebereichen 4a bzw. 4b einer Trennplatte 4 gedacht sind, sind dabei voneinander getrennt bzw. voneinander beabstandet ausgebildet und befinden sich vorzugsweise jeweils lediglich in Bereichen, die später (nach dem Löten) eine Lötverbindung zwischen zwei Komponenten ausbilden sollen. Zwischen den Anlagebereichen 4a, 4b einer Trennplattenseite 4.1, 4.2 befinden sich somit in der gestapelten Ansicht von Fig. 3 lotfreie Bereiche 15, die keinen Kontakt mit einer Lotschicht L haben.

In dem ersten Ausführungsbeispiel gemäß der Figuren 3 und 4 werden, wie vorstehend beschrieben, die Lotmaterialschichten L lediglich auf die Sidebars 8 und Fins 3 aufgebracht. Abweichend von dieser Ausführungsform besteht natürlich auch die Möglichkeit, Lotmaterialschichten L gemäß einer zweiten Ausführungsform, die in Fig. 5 dargestellt ist, nur auf den Trennplatten 4 vorzusehen. In diesem Fall werden die Anlagebereiche 4a und 4b auf den Trennplatten 4 aus Lot L gebildet, wohingegen die entsprechenden Anlageflächen 8a, 8b der Sidebars 8 und Anlageflächen 12b und 14a der Fins 3 kein Lot aufweisen. Der Auftrag der Lotschicht L auf die Trennplatten 4 erfolgt derart, dass das Material M2 der Trennplatten 4 in einer Grenzschicht mit dem Lot L eine Legierung bildet wie in Fig. 3 in dem Detail für die Sidebars 8 dargestellt. Des Weiteren sind beliebige Kombinationen der Ausführungsformen nach Fig. 3, 4 und 5 denkbar, bei denen zumindest auf einer der Komponenten 3, 4 und 8 im geplanten Verbindungsbereich der Komponenten 3, 4 und 8 eine Lotschicht L aufgebracht wird oder auf beiden Komponenten.

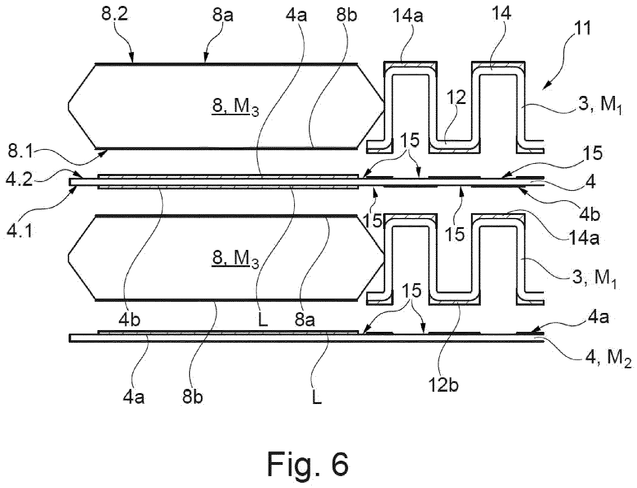

Es besteht beispielsweise, wie in Fig. 6 dargestellt, des Weiteren die Möglichkeit, im Verbindungsbereich zwischen Sidebars 8 und den Trennplatten 4 Lotmaterialschichten L auf die benachbarten Trennplatten 4 aufzubringen, so dass diese abgegrenzte Anlagebereiche 4a und 4b aus Lot L aufweisen, an denen dann jeweils der zugeordnete Sidebar 8 mit seiner entsprechenden Anlagefläche 8a bzw. 8b anliegt, die dann jeweils kein Lotmaterial L aufweist. Dies ist auch in der Figur 3 anhand einer Trennplatte 4 mit unterbrochenen Linien zu den entsprechenden Bezugszeichen 4a, 4b, 8a, 8b angedeutet. Im Verbindungsbereich zwischen Fins 3 und Trennplatten 4 werden hingegen Lotmaterialschichten L auf die Wellendächer 12, 14 der Fins 3 aufgebracht, sodass diese abgegrenzte Anlageflächen 12b, 14a aus Lot aufweisen, an denen dann jeweils eine benachbarte Trennplatte 4 mit ihren entsprechenden Anlagebereichen 4a, 4b anliegt, die jeweils kein Lotmaterial L aufweisen.

Aus den Figuren 3 bis 6 ist zu ersehen, dass in einer Ansicht nach dem Stapeln der Komponenten 3, 4 und 8 in Bezug auf eine jeweilige Trennplattenseite 4.1 oder 4.2, zwischen benachbarten Lotschichten L lotfreie Bereiche 15 vorhanden sind, die (zumindest vor dem Löten) kein Lotmaterial L aufweisen.
Dies bedeutet, dass beispielsweise in der ersten Ausführungsform gemäß der Fig. 3 und 4 zwischen den aus Lot gebildeten oberen Anlageflächen 8a der Sidebars und den aus Lot gebildeten Anlageflächen 14a der Fins 3 bezogen auf eine Unterseite 4.1 einer Trennplatte 4 in horizontaler Richtung lotfreie Bereiche 15 vorhanden sind. Gleiches gilt in Bezug auf die Oberseite einer jeweiligen Trennplatte 4.2: zwischen den unteren Anlageflächen 8b der Sidebars, die aus Lot L gebildet sind, und den ebenfalls aus Lot L gebildeten Anlageflächen 12b der Fins 3 befinden sich in horizontaler Richtung lotfreie Bereiche 15. In anderen Worten bedeutet dies, dass zwischen den Anlagebereichen 4a, 4b der Trennplatten bezogen auf eine jeweilige Trennplattenseite 4.1, 4.2 Bereiche 15 vorhanden sind, die nach dem Stapeln der Komponenten 3, 4 und 8 nicht mit einer Lotschicht L in Kontakt sind bzw. auch keine Lotschicht (L) aufweisen. Sind die Komponenten 8, 3, 4 so gestapelt (siehe Figur 3), dass sämtliche Anlageflächen 8a, 8b, 14a, 12b an den jeweils zugeordneten Anlagebereichen 4a, 4b anliegen, werden die aneinander angeordneten Komponenten 8, 3, 4 erhitzt, vorzugsweise in einem Ofen oder in einem flüssigen Wärmeträgerbad, wie beispielsweise einer Salzschmelze, so dass das Lotmaterial L geschmolzen wird und am Ort der Anlageflächen 8a, 8b, 14a, 12b entsprechende Lötverbindungen mit den Trennplatten 4 erzeugt werden.

Nach dem Löten können zur Zu- bzw. Abführung der wärmeaustauschenden Fluide A, B, C, D, E über den Öffnungen 9 (vgl. Figur 2) z.B. halbzylinderförmige Sammler 7 (oder Header) angeschweißt werden.

Weiterhin kann an jeden Sammler 7 vorzugsweise ein zylindrischer Stutzen 6 angeschweißt werden. Die Stutzen 6 dienen zum Anschluss einer zu- bzw. abführenden Rohrleitung an den jeweiligen Sammler 7.

### Bezugszeichenliste

| | |
|---|---|
| 1 | Wärmeaustauschpassage |
| 2 | Verteilerfin |
| 3 | Fin, Wärmeleitstruktur |
| 4 | Trennplatte |
| 4.1 | Unterseite Trennplatte |
| 4.2 | Oberseite Trennplatte |
| 4a, 4b | Anlagebereich Trennplatte |
| 5 | Deckplatten |
| 6 | Stutzen |
| 7 | Sammler |
| 7a | Innenseite |
| 7b | Rand |
| 8 | Sidebar, Randleiste |
| 8.1 | Unterseite Sidebar |
| 8.2 | Oberseite Sidebar |
| 8a, 8b | Anlagefläche Sidebar |
| 9 | Öffnung |
| 10 | Plattenwärmeübertrager |
| 11 | Plattenwärmeübertragerblock, Stapel |
| 12 | Unteres Wellendach |
| 12b | Anlagefläche unteres Wellendach |
| 13 | Wellensteg |
| 14 | Oberes Wellendach |
| 14a | Anlagefläche oberes Wellendach |
| 15 | lotfreier Bereich |
| A, B, C, D, E | Fluid |
| G | Grenzschicht |
| I | Innenraum |
| L | Lotmaterial bzw. Lotmaterialschicht |
| M1 | Material Wärmeleitstruktur 3 |
| M2 | Material Trennplatte 4 |
| M3 | Material Sidebar, Randleiste 8 |
| Z | Dicke Trennplatte |
| Y1 | Dicke Lotmaterialschicht Sidebar |
| Y2 | Dicke Lotmaterialschicht Fin |

## Patentansprüche

1. Verfahren zur Herstellung eines gelöteten Plattenwärmeübertragerblocks (11), der eine Mehrzahl an Wärmeaustauschpassagen (1) zum indirekten Wärmeaustausch zwischen zumindest zwei Fluiden aufweist, wobei der Plattenwärmeübertragerblock (11) aus Trennplatten (4), Randleisten (8) und Wärmeleitstrukturen (3) als Komponenten (4, 8, 3) aufgebaut wird, wobei die Wärmeleitstrukturen (3) eine wellenförmige Struktur mit abwechselnd angeordneten Wellendächern (12, 14) und Wellenstegen (13) aufweisen oder bilden, und wobei die Wellendächer (12, 14) parallel zueinander angeordnet sind, aufweisend folgende Schritte:
- Anordnen der Komponenten (3, 4, 8) in einem Stapel (11) durch paralleles Anordnen der Trennplatten (4) unter Einlegen von Randleisten (8) und Wärmeleitstrukturen (3) zwischen die Trennplatten (4), wobei eine jeweilige Wärmeaustauschpassage (1) durch jeweils zumindest zwei Randleisten (8) begrenzt wird, und wobei die Randleisten (8) jeweils mit einer ersten Anlagefläche (8a) an einem Anlagebereich (4b) einer benachbarten Trennplatte (4) sowie mit einer der ersten Anlagefläche (8a) abgewandten weiteren, zweiten Anlagefläche (8b) an einem weiteren Anlagebereich (4a) einer weiteren, benachbarten Trennplatte (4) anliegen, und wobei die Wellendächer (12, 14) der jeweiligen Wärmeleitstruktur/en (3) jeweils mit einer Anlagefläche (12b, 14a) an einem zugeordneten Anlagebereich (4b) der benachbarten Trennplatten (4) anliegen,
- Löten des Stapels (11),
**dadurch gekennzeichnet, dass** vor dem Anordnen der Komponenten (3, 4, 8) in dem Stapel Lotmaterial (L) derart auf eine oder mehrere der Komponenten (3, 4, 8) des Plattenwärmeübertragerblocks (11) aufgebracht wird,
- dass die jeweilige Anlagefläche (8a, 8b, 12b, 14a) und/oder der jeweilige Anlagebereich (4a, 4b) aus Lot gebildet ist und
- dass in einer Betrachtung nach dem Anordnen der Komponenten (3, 4, 8) in dem Stapel (11) und vor dem Löten des Stapels (11), Oberflächenbereiche (15), die sich auf einer Seite (4.1, 4.2) einer jeweiligen Trennplatte (4) zwischen den Anlagebereichen (4a, 4b) und/oder den Anlageflächen (8a, 8b, 12b, 14a) befinden, frei von einer Lotschicht (L) oder nicht mit einer Lotschicht (L) in Kontakt sind.

2. Verfahren nach Anspruch 1, **dadurch gekennzeichnet, dass** vor dem Anordnen der Komponenten (3, 4, 8) in einem Stapel Lotmaterial (L) derart auf eine oder mehrere der Komponenten (3, 4, 8) des Plattenwärmeübertragerblocks (11) aufgebracht wird, dass in zumindest einer Grenzschicht (G) zwischen der jeweiligen Komponente (3, 4, 8) und dem Lotmaterial (L) eine Legierung zwischen dem Lotmaterial (L) und dem Material (M1, M2, M3) der jeweiligen Komponente (3, 4, 8) gebildet wird.

3. Verfahren nach Anspruch 1 oder 2, **dadurch gekennzeichnet, dass** in einer Betrachtung nach dem Anordnen der Komponenten in dem Stapel (11) und vor dem Löten des Stapels (11) alle Oberflächenbereiche (15), die sich auf einer Seite einer jeweiligen Trennplatte (4) zwischen den Anlagebereichen (4a, 4b) und/oder den Anlageflächen (8a, 8b, 12b, 14a) befinden, frei von einer Lotschicht (L) sind oder nicht mit einer Lotschicht (L) in Kontakt stehen.

4. Verfahren nach einem der vorangehenden Ansprüche, **dadurch gekennzeichnet, dass** die Anlageflächen (8a, 8b, 12b, 14a) und/oder die Anlagebereiche (4a, 4b), die aus Lot (L) auf den Komponenten (3, 4, 8) ausgebildet werden, mit über die jeweilige Anlagefläche (8a, 8b, 12b, 14a) und /oder den jeweiligen Anlagebereich (4a, 4b) gleichbleibender Dicke (Y1, Y2) ausgebildet werden.

5. Verfahren nach einem der vorhergehenden Ansprüche, **dadurch gekennzeichnet, dass** das Lotmaterial (L) derart auf die Komponenten (8, 3, 4) des Plattenwärmeübertragerblocks (11) aufgebracht wird, dass das Lotmaterial (L) zumindest einer Anlagefläche (8a, 8b, 12b, 14a) und/oder zumindest eines Anlagebereiches (4a, 4b) eine Dicke (Y1) aufweist, die sich von der Dicke (Y2) des Lotmaterials (L) einer anderen Anlagefläche (8a, 8b, 12b, 14a) und/oder eines anderen Anlagebereiches (4a, 4b) unterscheidet.

6. Verfahren nach einem der vorhergehenden Ansprüche, **dadurch gekennzeichnet, dass** das Lotmaterial (L) derart auf die Komponenten (8, 3, 4) des Plattenwärmeübertragerblocks (11) aufgebracht wird, dass das Lotmaterial (L) zumindest einer Anlagefläche (8a, 8b, 12b, 14a) und/oder zumindest eines Anlagebereiches (4a, 4b) eine Zusammensetzung aufweist, die sich von der Zusammensetzung des Lotmaterials einer anderen Anlagefläche (8a, 8b, 12b, 14a) und/oder eines anderen Anlagebereiches (4a, 4b) unterscheidet.

7. Verfahren nach einem der vorangehenden Ansprüche, **dadurch gekennzeichnet, dass** vor dem Anordnen der Komponenten (3, 4, 8) in einem Stapel das Lotmaterial (L) auf die Randleisten (8) und die Wärmeleitstrukturen (3) aufgebracht wird, und die Trennplatten (4) frei von einer Lotschicht (L) sind.

8. Verfahren nach einem der Ansprüche 1 bis 6, **dadurch gekennzeichnet, dass** vor dem Anordnen der Komponenten (3, 4, 8) in dem Stapel (11) das Lotmaterial (L) auf die Trennplatten (4) aufgebracht wird und die Randleisten (8) und die Wärmeleitstrukturen (3) frei von einer Lotschicht (L) sind.

9. Verfahren nach einem der Ansprüche 1 bis 6, **dadurch gekennzeichnet, dass** vor dem Anordnen der Komponenten (3, 4, 8) in dem Stapel (11) das Lotmaterial (L) auf die Trennplatten (4), die Randleisten (8) und die Wärmeleitstrukturen (3) aufgebracht wird.

10. Verfahren nach einem der vorhergehenden Ansprüche, **dadurch gekennzeichnet, dass** das Lotmaterial (L) mit einem 3D-Druck-Verfahren aufgebracht wird.

11. Verfahren nach einem der Ansprüche 1 bis 9, **dadurch gekennzeichnet, dass** das Lotmaterial (L) durch thermisches Spritzen des Lotmaterials (L) aufgebracht wird.

12. Verfahren nach einem der vorhergehenden Ansprüche, **dadurch gekennzeichnet, dass** das Lotmaterial (L) zumindest einen oder mehrere der folgenden Stoffe aufweist: Aluminium, Silizium, Magnesium.

13. Verfahren nach einem der vorhergehenden Ansprüche, **dadurch gekennzeichnet, dass** die auf die mindestens eine Komponente (3, 4, 8) aufgebrachte Lotmaterialschicht (L) nach dem Aufbringen eine Metallschicht im festen Aggregatszustand ist.

## Claims

1. Method of producing a soldered plate heat exchanger block (11) having a plurality of heat exchange passages (1) for indirect heat exchange between at least two fluids, wherein the plate heat exchanger block (11) is composed of separator plates (4), sidebars (8) and heat-conducting structures (3) as components (4, 8, 3), wherein the heat-conducting structures (3) have or form a corrugated structure with alternately arranged corrugation top lands (12, 14) and corrugation flanks (13), and wherein the corrugation top lands (12, 14) are arranged parallel to each other, having the following steps:
- arranging the components (3, 4, 8) in a stack (11) by arranging in parallel the separator plates (4) with the sidebars (8) and heat-conducting structures (3) being inserted between the separator plates (4), wherein a respective heat exchange passage (1) is bordered by at least two sidebars (8), and wherein in each case, a first contact surface (8a) of the sidebars (8) lies against a contact region (4b) of an adjacent separator plate (4), and a further second contact surface (8b) facing away from the first contact surface (8a) lies against another contact region (4a) of a further adjacent separator plate (4), and wherein a contact surface (12b, 14a) of the corrugation top lands (12, 14) of the respective heat-conducting structure(s) (3) in each case lies against an associated contact region (4b) of the adjacent separator plates (4),
- soldering the stack (11),
**characterized in that** before the components (3, 4, 8) are arranged in the stack, solder material (L) is applied to one or more of the components (3, 4, 8) of the plate heat exchanger block (11) in such a way
- that the respective contact surface (8a, 8b, 12b, 14a) and/or the respective contact region (4a, 4b) is formed from solder, and
- that, in an examination after arranging the components (3, 4, 8) in the stack (11) and before soldering the stack (11), surface regions (15) which are located on one side (4.1, 4.2) of a respective separator plate (4) between the contact regions (4a, 4b) and/or the contact surfaces (8a, 8b, 12b, 14a) are free of a solder layer (L) or are not in contact with a solder layer (L).

2. Method according to Claim 1, **characterized in that** before the components (3, 4, 8) are arranged in a stack, solder material (L) is applied to one or more of the components (3, 4, 8) of the plate heat exchanger block (11) in such a way that an alloy is formed between the solder material (L) and the material (M1, M2, M3) of the respective component (3, 4, 8) in at least one boundary layer (G) between the respective component (3, 4, 8) and the solder material (L).

3. Method according to Claims 1 or 2, **characterized in that** in an examination after arranging the components in the stack (11) and before soldering the stack (11), all surface regions (15) which are located on one side of a respective separator plate (4) between the contact regions (4a, 4b) and/or the contact surfaces (8a, 8b, 12b, 14a) are free of a solder layer (L) or are not in contact with a solder layer (L).

4. Method according to any one of the preceding claims, **characterized in that** the contact surfaces (8a, 8b, 12b, 14a) and/or the contact regions (4a, 4b) formed from solder (L) on the components (3, 4, 8) are formed with a thickness (Y1, Y2) that remains constant over the respective contact surface (8a, 8b, 12b, 14a) and/or the respective contact region (4a, 4b).

5. Method according to any one of the preceding claims, **characterized in that** the solder material (L) is applied to the components (8, 3, 4) of the plate heat exchanger block (11) in such a way that the solder material (L) of at least one contact surface (8a, 8b, 12b, 14a) and/or at least one contact region (4a, 4b) has a thickness (Y1) which differs from the thickness (Y2) of the solder material (L) of another contact surface (8a, 8b, 12b, 14a) and/or of another contact region (4a, 4b).

6. Method according to any one of the preceding claims, **characterized in that** the solder material (L) is applied to the components (8, 3, 4) of the plate heat exchanger block (11) in such a way that the solder material (L) of at least one contact surface (8a, 8b, 12b, 14a) and/or at least one contact region (4a, 4b) has a composition different from the composition of the solder material of another contact surface (8a, 8b, 12b, 14a) and/or another contact region (4a, 4b).

7. Method according to any one of the preceding claims, **characterized in that** before the components (3, 4, 8) are arranged in a stack, the solder material (L) is applied to the sidebars (8) and to the heat-conducting structures (3), and the separator plates (4) are free of a solder layer (L).

8. Method according to any one of Claims 1 to 6, **characterized in that** before the components (3, 4, 8)are arranged in the stack (11), the solder material (L) is applied to the separator plates (4), and the sidebars (8), and the heat-conducting structures (3) are free of a solder layer (L).

9. Method according to any one of Claims 1 to 6, **characterized in that** before the components (3, 4, 8) are arranged in the stack (11), the solder material (L) is applied to the separator plates (4), the sidebars (8) and the heat-conducting structures (3).

10. Method according to any one of the preceding claims, **characterized in that** the solder material (L) is applied using a 3D printing method.

11. Method according to any one of Claims 1 to 9, **characterized in that** the solder material (L) is applied by thermal spraying of the solder material (L).

12. Method according to any one of the preceding claims, **characterized in that** the solder material (L) includes at least one or more of the following substances: aluminum, silicon, magnesium.

13. Method according to any one of the preceding claims, **characterized in that** the solder material layer (L) applied to the at least one component (3, 4, 8) is, after being applied, a metal layer in a solid aggregate state.

## Revendications

1. Procédé de fabrication d'un bloc d'échangeur de chaleur à plaques soudé (11), lequel comporte une pluralité de passages d'échange de chaleur (1) destinés à l'échange de chaleur indirect entre au moins deux fluides, le bloc d'échangeur de chaleur à plaques (11) étant constitué de plaques de séparation (4), de languettes de bord (8) et de structures thermiquement conductrices (3) en tant que composants (4, 8, 3), les structures thermiquement conductrices (3) présentant ou formant une structure ondulée, dotée de crêtes d'ondulation (12, 14) et d'âmes d'ondulation (13) disposées en alternance, et les crêtes d'ondulation (12, 14) étant disposées parallèlement les unes aux autres, comportant les étapes suivantes :
- disposition des composants (3, 4, 8) en une pile (11) par disposition en parallèle des plaques de séparation (4) avec l'insertion de languettes de bord (8) et de structures thermiquement conductrices (3) entre les plaques de séparation (4), un passage d'échange de chaleur (1) respectif étant délimité respectivement par au moins deux languettes de bord (8) et les languettes de bord (8) reposant respectivement avec une première surface d'appui (8a) sur une zone d'appui (4b) d'une plaque de séparation (4) voisine, ainsi qu'avec une deuxième surface d'appui (8b) supplémentaire opposée à la première surface d'appui (8a) sur une zone d'appui (4a) supplémentaire d'une plaque de séparation (4) voisine supplémentaire et les crêtes d'ondulation (12, 14) de la ou des structures thermiquement conductrices (3) respective(s) reposant respectivement avec une surface d'appui (12b, 14a) sur une zone d'appui (4b) associée de la plaque de séparation (4) voisine,
- brasage de la pile (11),
**caractérisé en ce que,** avant la disposition des composants (3, 4, 8) en la pile, du matériau à braser (L) est appliqué sur un ou plusieurs des composants (3, 4, 8) du bloc d'échangeur de chaleur à plaques (11) de telle façon que
- la surface d'appui (8a, 8b, 12b, 14a) respective et/ou la zone d'appui (4a, 4b) respective soient formées de brasage et
- dans une observation, après la disposition des composants (3, 4, 8) en la pile (11) et avant le brasage de la pile (11), des zones de surface (15), situées sur un côté (4.1, 4.2) d'une plaque de séparation (4) respective entre les zones d'appui (4a, 4b) et/ou les surfaces d'appui (8a, 8b, 12b, 14a), sont dépourvues d'une couche de brasage (L) ou ne sont pas en contact avec une couche de brasage (L).

2. Procédé selon la revendication 1, **caractérisé en ce que,** avant la disposition des composants (3, 4, 8) en une pile, du matériau à braser (L) est appliqué sur un ou plusieurs des composants (3, 4, 8) du bloc d'échangeur de chaleur à plaques (11) de telle façon que dans au moins une couche limite (G) entre les composants (3, 4, 8) respectifs et le matériau à braser (L), un alliage soit formé entre le matériau à braser (L) et le matériau (M1, M2, M3) des composants (3, 4, 8) respectifs.

3. Procédé selon la revendication 1 ou 2, **caractérisé en ce que,** dans une observation, après la disposition des composants en la pile (11) et avant le brasage de la pile (11), toutes les zones de surface (15), situées sur un côté d'une plaque de séparation (4) respective entre les zones d'appui (4a, 4b) et/ou les surfaces d'appui (8a, 8b, 12b, 14a), sont dépourvues d'une couche de brasage (L) ou ne soient pas en contact avec une couche de brasage (L).

4. Procédé selon l'une quelconque des revendications précédentes, **caractérisé en ce que** les surfaces d'appui (8a, 8b, 12b, 14a) et/ou les zones d'appui (4a, 4b), qui sont constituées à partir de brasage (L) sur les composants (3, 4, 8), sont formées avec une épaisseur (Y1, Y2) restant constante sur la surface d'appui (8a, 8b, 12b, 14a) respective et/ou la zone d'appui (4a, 4b) respective.

5. Procédé selon l'une quelconque des revendications précédentes, **caractérisé en ce que** le matériau à braser (L) est appliqué sur les composants (8, 3, 4) du bloc d'échangeur de chaleur à plaques (11) de telle façon que le matériau à braser (L) présente une épaisseur (Y1) d'au moins une surface d'appui (8a, 8b, 12b, 14a) et/ou d'au moins une zone d'appui (4a, 4b) qui est différente de l'épaisseur (Y2) du matériau à braser (L) d'une autre surface d'appui (8a, 8b, 12b, 14a) et/ou d'une autre zone d'appui (4a, 4b).

6. Procédé selon l'une quelconque des revendications précédentes, **caractérisé en ce que** le matériau à braser (L) est appliqué sur les composants (8, 3, 4) du bloc d'échangeur de chaleur à plaques (11) de telle façon que le matériau à braser (L) d'au moins une surface d'appui (8a, 8b, 12b, 14a) et/ou d'au moins une zone d'appui (4a, 4b) présente une composition qui est différente de la composition du matériau à braser d'une autre surface d'appui (8a, 8b, 12b, 14a) et/ou d'une autre zone d'appui (4a, 4b).

7. Procédé selon l'une quelconque des revendications précédentes, **caractérisé en ce que,** avant la disposition des composants (3, 4, 8) en une pile, le matériau à braser (L) est appliqué sur les languettes de bord (8) et les structures thermiquement conductrices (3) et les plaques de séparation (4) sont dépourvues d'une couche de brasage (L).

8. Procédé selon l'une quelconque des revendications 1 à 6, **caractérisé en ce que**, avant la disposition des composants (3, 4, 8) en la pile (11), le matériau à braser (L) est appliqué sur les plaques de séparation (4) et les languettes de bord (8) et les structures thermiquement conductrices (3) sont dépourvues d'une couche de brasage (L).

9. Procédé selon l'une quelconque des revendications 1 à 6, **caractérisé en ce que**, avant la disposition des composants (3, 4, 8) en la pile (11), le matériau à braser (L) est appliqué sur les plaques de séparation (4), les languettes de bord (8) et les structures thermiquement conductrices (3).

10. Procédé selon l'une quelconque des revendications précédentes, **caractérisé en ce que** le matériau à braser (L) est appliqué avec un procédé d'impression en 3D.

11. Procédé selon l'une quelconque des revendications 1 à 9, **caractérisé en ce que** le matériau à braser (L) est appliqué par pulvérisation thermique du matériau à braser (L).

12. Procédé selon l'une quelconque des revendications précédentes, **caractérisé en ce que** le matériau à braser (L) présente au moins une ou plusieurs des substances suivantes : aluminium, silicium, magnésium.

13. Procédé selon l'une quelconque des revendications précédentes, **caractérisé en ce que** la couche de matériau à braser (L) appliquée sur l'au moins un composant (3, 4, 8) se trouve dans un état d'agrégation solide après l'application d'une couche métallique.
